# EUROPÄISCHE PATENTSCHRIFT

(11) **EP 3 263 202 B1**
(45) Veröffentlichungstag und Bekanntmachung des Hinweises auf die Patenterteilung: **21.10.2020**
(21) Anmeldenummer: 17176537.3
(22) Anmeldetag: 19.06.2017
(51) Int. Cl.: B01D 29/21, B01D 29/96, B01D 46/42

(54) **ENTNAHMESYSTEM SOWIE ENTNAHMEHILFE FÜR EIN ABSCHEIDEELEMENT**
WITHDRAWAL SYSTEM AND WITHDRAWAL AID FOR A SEPARATION ELEMENT
SYSTÈME DE PRÉLÈVEMENT ET AIDE AU PRÉLÈVEMENT POUR UN ÉLÉMENT DE SÉPARATION

(30) Priorität: 29.06.2016 DE 102016007849
(43) Veröffentlichungstag der Anmeldung: 03.01.2018
(73) Patentinhaber: MANN + HUMMEL GMBH, 71636 Ludwigsburg (DE)
(72) Erfinder: WILDERMUTH, Andreas, 71672 Marbach (DE); PFLÜGER, Frank, 74343 Sachsenheim (DE); JOKSCHAS, Günter, 71540 Murrhardt (DE)
(74) Vertreter: Seyboth, Matthias

(56) Entgegenhaltungen:
- DE-A1- 4 415 890
- US-A1- 2010 176 046

## Beschreibung

### Technisches Gebiet

Die Erfindung betrifft ein Entnahmesystem sowie eine Entnahmehilfe zum Entnehmen des Abscheideelements aus einem Gehäuse.

### Stand der Technik

Abscheideelemente, beispielsweise Kraftstoff- oder Ölfilter, müssen in regelmäßigen Abständen ausgetauscht werden. Die auszutauschenden Abscheideelemente sind dazu aus einem Gehäuse, in dem sie während des Gebrauchs angeordnet sind, zu entnehmen. Zum Entnehmen der Abscheideelemente aus dem Gehäuse werden in der Praxis, etwa in Kfz-Werkstätten, oftmals Standardwerkzeuge wie Schraubendreher oder Zangen eingesetzt. Mit diesen Werkzeugen wird versucht, das Abscheideelement aus dem Gehäuse herauszuhebeln und/oder herauszuziehen. Dabei besteht jedoch die Gefahr, dass das Abscheideelement bzw. das Gehäuse beschädigt wird, insbesondere im Bereich einer Dichtfläche für einen das Gehäuse verschließenden Gehäusedeckel. Bruchstücke des Abscheideelements können im Gehäuse verbleiben und zu Funktionsstörungen führen. Darüber hinaus können die eingesetzten Werkzeuge beim unsachgemäßen Gebrauch leicht abrutschen, woraus Verletzungen resultieren können.

US 6,280,620 B1 beschreibt ein Entnahmesystem mit einem Ölfilter und mit einem Steckschlüssel, wobei an dem Ölfilter radial auskragend Aufnahmeöffnungen spezifisch für zwei korrespondierende Fortsätze des Steckschlüssels ausgebildet sind. Mittels des Steckschlüssels kann der Ölfilter um eine Längsachse gedreht werden, wenn die Fortsätze in die Aufnahmeöffnungen eingeführt sind. Nachteilig an dieser Ausgestaltung des Ölfilters ist insbesondere, dass an dem Ölfilter radial abstehend die Aufnahmeöffnungen ausgebildet werden müssen. Dadurch wird der Raumbedarf des Ölfilters nachteilig vergrößert. Auch ist ein axial gerichtetes Herausziehen des Ölfilters mit dem Steckschlüssel aus dem Gehäuse nicht möglich.

Aus der EP 1 817 093 B1 ist ein Kraftstofffilterelement mit einer Endscheibe und mit einem elementfest angeordneten Klappgriff bekannt. Um den Bauraum des Ölfilters nicht übermäßig zu vergrößern oder die Durchströmung des Ölfilters zu behindern, muss ein solcher Griff jedoch sehr schlank ausgebildet werden. Dadurch wird die Handhabung erschwert und es besteht die Gefahr, dass der Griff bei der Entnahme des Ölfilters versagt. Ferner verteuert der Griff den Ölfilter, da der Griff integraler Bestandteil des Ölfilters ist. Ein vergleichbares Entnahmesystem ist aus der DE 11 2009 000 742 T5 bekannt geworden.

DE 44 15 890 A1 offenbart ein weiteres Entnahmesystem mit einem Filterelement mit einer Endscheibe mit einer zentralen Öffnung. Zur Entnahme des Filterelements aus einem Gehäuse dient eine Entnahmehilfe mit zwei Rastfingern, die unmittelbar über die zentrale Öffnung der Endscheibe eingeführt und mit einem gitterförmigen Stützrohr des Filterelements verrastet werden. Die Entnahmehilfe ist so klein ausgeführt, dass sie nur mit einem Finger durchgriffen werden kann. Dadurch wird die Krafteinleitung für einen Anwender erschwert. Weiterhin kann der am Filterelement angesetzte Griff leicht verkippen, was die Verletzungsgefahr erhöht.

Es ist deshalb die Aufgabe der Erfindung, ein Entnahmesystem mit einem Abscheideelement zum Abscheiden von in einem Fluid enthaltenen Verunreinigungen und mit einer Entnahmehilfe sowie eine Entnahmehilfe für ein solches System anzugeben, die eine sichere, zügige und bequeme Entnahme des Abscheideelements aus einem Gehäuse ermöglichen, ohne dass die Entnahmehilfe im Abscheidebetrieb des Abscheideelements den Bauraum des Abscheideelements vergrößert, die Durchströmung des Abscheideelements beeinflusst oder die Herstellkosten des Abscheideelements erhöht.

Die das Entnahmesystem betreffende Aufgabe wird durch ein Entnahmesystem mit den Merkmalen des unabhängigen Anspruchs 1 gelöst. Die Entnahmehilfe weist die in Anspruch 6 angegebenen Merkmale auf.

### Offenbarung der Erfindung

Bei dem erfindungsgemäßen Entnahmesystem wird die Entnahmehilfe lediglich zum Entnehmen des Abscheideelements aus dem Gehäuse mit dem Abscheideelement verbunden (verrastet/verschnappt). Nach der Entnahme des Abscheideelements wird das Abscheideelement typischerweise mitsamt der Entnahmehilfe entsorgt oder für dessen Wiederverwendung vom Abscheideelement getrennt. Der Bauraum des Abscheideelements wird somit durch die Entnahmehilfe nicht vergrößert, da diese beim Gebrauch des Abscheideelements nicht am Abscheideelement angeordnet ist. Die Entnahmehilfe greift in ihrem mit dem Abscheideelement verkoppelten bzw. verrasteten Zustand nicht mit ihren Rastfingern in die zentrale Ausnehmung der Endscheibe des Abscheideelements ein. Die Hakenelemente hintergreifen die Endscheibe vielmehr in einer zur Längsachse des Abscheideelements radialen Richtung außerhalb eines die zentrale Ausnehmung in radialer Richtung nach außen unmittelbar begrenzenden Endscheibenbereichs. Das erfindungsgemäße Entnahmesystem erlaubt dadurch eine insgesamt vereinfachte und sicherere Entnahme des Abscheideelements aus einem Gehäuse. Mittels der Entnahmehilfe kann das Abscheideelement mit einem solch großen Drehmoment beaufschlagt werden, dass sich dieses vereinfacht aus seinem Dichtsitz im Gehäuse lockern lässt. Dadurch, dass die Entnahmehilfe kein integraler Bestandteil des Abscheideelements ist, kann das Abscheideelement insgesamt günstiger und kompakter ausgeführt werden. Die zentrale Ausnehmung der Endscheibe sowie auch der an die zentrale Ausnehmung angrenzende Endscheibenbereich können dadurch allein mit Rücksicht auf eine gewünschte Strömungsführung des Fluids bzw. eine Abdichtung der Endscheibe gegen angrenzende Gehäuseteile ausgestaltet werden. Das Abscheideelement kann beispielsweise als ein Kraftstoff- oder Ölfilter bzw. auch als ein Wasserabscheider für in Kraftstoff enthaltenes Wasser ausgeführt sein.

Das Abscheidemedium umschließt typischerweise einen Innenraum des Abscheideelements in einer radialen Richtung. Die zentrale Ausnehmung der Endscheibe eröffnet dabei einen Zugang zu dem Innenraum in axialer Richtung. Das Abscheidemedium kann als ein sternförmig gefalteter Filterbalg ausgeführt sein.

Der Griffabschnitt der Entnahmehilfe ist bevorzugt derart ausgebildet, dass er von wenigstens zwei Fingern, vorzugsweise von 4 Fingern, der menschlichen Hand umgriffen werden kann. Insbesondere kann der Griffabschnitt Griffmulden für die Finger aufweisen. Der Griffabschnitt ist vorzugsweise derart mittig an der Entnahmehilfe angeordnet, dass er bei an der Endscheibe verrasteter Entnahmehilfe die zentrale Ausnehmung der Endscheibe überspannt. Alternativ kann der Griffabschnitt auch zweigeteilt ausgeführt sein, etwa in der Art, dass zwei voneinander getrennte Griffteilabschnitte nach radial außen von der Entnahmehilfe auskragen.

Zum Verrasten der Entnahmehilfe an der Endscheibe können die Rastfinger in radialer Richtung bevorzugt elastisch deformiert werden. Die Rastfinger sind mit anderen Worten relativ zueinander aufspreizbar oder zusammendrückbar. Wenn die Entnahmehilfe weit genug auf die Endscheibe aufgeschoben wurde, federn die Rastfinger selbsttätig in ihre unbelastete Ausgangsposition zurück und bringen die Hakenelemente in Hintergriff mit der Endscheibe.

Erfindungsgemäß übergreift die Entnahmehilfe in ihrem mit der Endscheibe verrasteten Zustand die Endscheibe mit ihren Rastfingern außenumfangsseitig. Die Rastfinger erstrecken sich somit radial außen an einem Außenumfang der Endscheibe. Dadurch wird eine möglichst große Stützbreite der Entnahmehilfe an der Endscheibe eingerichtet. Dies verbessert die Stabilität der Ankopplung der Entnahmehilfe an der Endscheibe und erleichtert das Einleiten von Drehmomenten in das Abscheideelement. Die Entnahmehilfe kann zum Entnehmen des Abscheideelements in einen Spalt zwischen der Endscheibe und dem Gehäuse eingeführt werden. Typischerweise liegen die Rastfinger radial außen an der Endscheibe unmittelbar an. Dies verbessert die Stabilität der Ankopplung weiter und schafft seitlichen Bewegungsspielraum beim Entnehmen des Abscheideelements.

Eine besonders bevorzugte Weiterbildung dieser Ausführungsform sieht vor, dass das Abscheidemedium als ein sternförmig gefalteter Balg ausgeführt ist, der die Längsachse des Abscheideelements ringförmig umgreift, wobei sich die Hakenelemente der Rastfinger in radialer Richtung in Falten des Abscheidemediums hinein erstrecken. Ein Abscheidemedium in der Form eines sternförmigen Balgs kann als Filter- bzw. als Koaleszermedium dienen. Durch die Faltung kann bei kompaktem Bau des Abscheideelements eine große Filterfläche eingerichtet werden. Die Rastfinger sind derart voneinander beabstandet angeordnet, dass sie mit den Falten kämmen, wenn die Entnahmehilfe an der Endscheibe verrastet ist. Über den Eingriff der Hakenelemente in die Falten kann ein Drehmoment in das Abscheideelement eingeleitet und das Abscheideelement dadurch vereinfacht aus seinem Sitz in einem Gehäuse gelöst werden. Ferner wird ermöglicht, die Endscheibe mit den Hakenelementen nach radial innen zu hintergreifen, auch wenn die Endscheibe in radialer Richtung nicht umlaufend über das Abscheidemedium übersteht.

Die Hakenelemente können in einer zur beanspruchten Erfindung alternativen Ausführungsform dazu ausgebildet sein, in Strömungsöffnungen der Endscheibe einzugreifen, die relativ zur zentralen Ausnehmung der Endscheibe in radialer Richtung nach außen versetzt angeordnet sind. Die Hakenelemente und/oder die Rastfinger können sich dann auch in Umfangsrichtung an einer jeweiligen Wandung der Strömungsöffnungen abstützen, so dass das Abscheideelement mit der Entnahmehilfe auch um eine Längsachse gedreht werden kann. Dadurch kann das Abscheideelement einfacher aus seinem Sitz im Gehäuse gelockert und mit geringerem Kraftaufwand in axialer Richtung (bezüglich der Längsachse des Abscheideelements) aus dem Gehäuse herausgezogen werden.

Eine alternative nicht erfindungsgemäße Ausführungsform kann darin bestehen dass die Endscheibe des Abscheideelements einen Ringspalt aufweist, und die Rastfinger der Entnahmehilfe sich in den Ringspalt hinein erstrecken, bevorzugt wobei die Endscheibe eine äußere Schulter aufweist, die den Ringspalt nach radial außen begrenzt, und wobei die Hakenelemente die äußere Schulter hintergreifen. Durch eine Gestaltung der Endscheibe mit Ringspalt kann die Durchströmung des Abscheideelements und die Abdichtung des Abscheideelements gegen das Gehäuse verbessert werden. Solche Abscheideelemente sind mit ungeeigneten Werkzeugen nur schwer aus dem Gehäuse zu entfernen. Die Entnahmehilfe nutzt die Gestaltung der Endscheibe aus, um ein besonders einfaches und sicheres Ankoppeln zu ermöglichen. Bevorzugt weist der Ringspalt Strömungsöffnungen auf, in die die Rastfinger und/oder Hakenelemente der Entnahmehilfe eingreifen, wenn die Entnahmehilfe an der Endscheibe verrastet ist.

Bei einer nicht erfindungsgemäßen Ausführungsform ist vorgesehen, dass die Hakenelemente jeweils nach radial außen gerichtet sind. Die Entnahmehilfe kann dann auf einfache Weise an der Endscheibe befestigt werden, wenn die Endscheibe eine umlaufende Nut, einen umlaufenden Ringspalt oder weitere Öffnungen radial außerhalb der zentralen Ausnehmung aufweist. Die Hakenelemente der Entnahmehilfe hintergreifen dann etwa eine äußere Schulter der Endscheibe nach radial außen. Die äußere Schulter kann beim Gebrauch des Abscheideelements fluiddicht an dem Gehäuse abgestützt sein.

Gemäß der erfindungsgemäßen Ausführungsform sind die Hakenelemente jeweils nach radial innen gerichtet. Dadurch wird ermöglicht, die Endscheibe von radial außen zu hintergreifen. Die Rastfinger können dann im verrasteten Zustand an einem Außenumfang der Endscheibe anliegen.

Eine besonders vorteilhafte Ausführungsform sieht vor, dass die Entnahmehilfe wenigstens zwei Arme aufweist, wobei an jedem der Arme wenigstens zwei, bevorzugt wenigstens fünf, Rastfinger ausgebildet sind. Die Rastfinger können dann besonders schlank ausgebildet werden. Dadurch wird das Ansetzen und Verrasten der Entnahmehilfe an der Endscheibe erleichtert. Gleichzeitig bleibt die Stabilität der Entnahmehilfe gewährleistet. Die Rastfinger eines Armes können insbesondere derart voneinander beabstandet angeordnet sein, dass sie mit Falten eines Abscheidemediums, das axial hinter der Endscheibe angeordnet ist, kämmen, wenn die Entnahmehilfe an der Endscheibe verrastet ist.

Bei einer weiteren besonders bevorzugten Ausführungsform ist vorgesehen, dass die Entnahmehilfe drei Rastfinger aufweist, insbesondere wobei ein Rastfinger an einem ersten Ende eines Griffabschnitts der Entnahmehilfe ausgebildet ist, und wobei zwei Rastfinger an einem zweiten Ende des Griffabschnitts angeordnet sind. Durch diese Ausgestaltung wird die Gefahr des Verkippens oder Abrutschens der Entnahmehilfe sowohl beim Verrasten der Entnahmehilfe an der Endscheibe als auch beim Herausziehen des Abscheideelements aus dem Gehäuse weiter reduziert. Ein Abstand zwischen den beiden Rastfingern am zweiten Ende des Griffabschnitts entspricht bevorzugt wenigstens der Breite eines dieser Rastfinger. Dadurch kann die Abstützung der Entnahmehilfe weiter verbessert werden. Ferner kann zwischen den beiden Rastfingern am zweiten Ende des Griffabschnitts ein Steg oder desgleichen der Endscheibe aufgenommen werden. Es kann dann durch Drehen der Entnahmehilfe ein Drehmoment um die Längsachse des Abscheideelements in das Abscheideelement eingeleitet werden. Die Rastfinger liegen vorzugsweise auf einer Kreisbahn. Das Hakenelement eines Rastfingers oder die Hakenelemente der Rastfinger eines Armes können jeweils auf dieser Kreisbahn einen Segmentwinkel zwischen 10° und 90° überstreichen. Der überstrichene Segmentwinkel beträgt bevorzugt wenigstens 15°, besonders bevorzugt wenigstens 20°. Der überstrichene Segmentwinkel beträgt bevorzugt höchstens 40°, besonders bevorzugt höchstens 30°.

Besonders bevorzugt ist zumindest ein Teil der Hakenelemente mit einer Einführschräge und einem Fortsatz ausgebildet, wobei der Fortsatz von einem Griffabschnitt der Entnahmehilfe abgewandt an dem jeweiligen Hakenelement angeordnet ist, und wobei jeder Fortsatz eine Zentrierfläche aufweist, die Zentrierfläche im Wesentlichen parallel oder unter einem spitzen Winkel zur Mittelachse der Entnahmehilfe ausgerichtet ist. Typischerweise sind alle Hakenelemente mit einer Einführschräge und einem Fortsatz ausgebildet. Vorzugsweise grenzt die Zentrierfläche an die Einführschräge an. Der spitze Winkel beträgt bevorzugt höchstens 20°. Dadurch kann erreicht werden, dass die Entnahmehilfe beim Ansetzen an der Endscheibe relativ zu dieser zentriert wird. Das Verrasten der Entnahmehilfe an der Endscheibe wird dadurch erleichtert. Ferner haben die Zentrierflächen eine Führungswirkung, so dass die Gefahr des Abrutschens der Entnahmehilfe von der Endscheibe beim Verrasten weiter verringert werden kann.

Bei einer vorteilhaften Ausführungsform ist vorgesehen, dass die Entnahmehilfe einen, bevorzugt rohrförmigen, Zentrierstutzen aufweist, der in die zentrale Ausnehmung der Endscheibe des Abscheideelements einführbar ist. Der Zentrierstutzen ist typischerweise mit einem Außendurchmesser ausgebildet, der geringfügig kleiner ist, etwa um höchstens 10 %, als ein Innendurchmesser der zentralen Ausnehmung der Endscheibe. Bevorzugt ragt der Zentrierstutzen in axialer Richtung über die Hakenelemente bzw. deren Fortsätze hinaus. Durch den Zentrierstutzen kann die Entnahmehilfe beim Ansetzen und Verrasten der Entnahmehilfe an der Endscheibe geführt werden. Ferner kann durch den Eingriff des Zentrierstutzens in die zentrale Ausnehmung verhindert werden, dass die Entnahmehilfe beim Entnehmen des Abscheideelements aus dem Gehäuse von der Endscheibe des aus einem Gehäuse zu entnehmenden Abscheideelements seitlich abrutscht.

Die Entnahmehilfe für ein Entnahmesystem mit den vorstehend beschriebenen Merkmalen erlaubt eine besonders einfache, sichere und wenig zeitaufwändige Entnahme eines Abscheideelements aus einem Gehäuse. Die Entnahmehilfe kann insbesondere aus einem Kunststoff oder aus einem metallischen Werkstoff bestehen, wobei die Entnahmehilfe bevorzugt als Spritzgussteil ausgebildet ist. Eine Entnahmehilfe aus Kunststoff ist besonders preisgünstig zu fertigen und weist ein geringes Gewicht auf. Eine Entnahmehilfe aus einem metallischen Werkstoff kann besonders stabil ausgeführt werden. Eine Entnahmehilfe aus einem metallischen Werkstoff kann erfindungsgemäß mit einem 3D-Druckverfahren gefertigt sein. Mit einem 3D-Druckverfahren lassen sich auch kleine Stückzahlen von Entnahmehilfen wirtschaftlich herstellen.

Weitere Vorteile der Erfindung ergeben sich aus der Beschreibung und der Zeichnung. Die vorstehend beschriebenen und noch weiter ausgeführten Merkmale können erfindungsgemäß einzeln für sich oder zu mehreren in beliebigen Kombinationen Verwendung finden.

### Kurze Beschreibung der Zeichnungen

In der Zeichnung zeigen:
- Fig. 1a: eine schematische, perspektivische Ansicht eines Abscheideelements in einem Gehäuse und eine erfindungsgemäßen Entnahmehilfe;
- Fig. 1b: eine schematische, perspektivische Ansicht der Entnahmehilfe von Fig. 1a, verrastet an einer Endscheibe des Abscheideelements, während eines Entnahmevorgangs;
- Fig. 1c: eine schematische Schnittdarstellung durch die Entnahmehilfe und das Abscheideelement von Fig. 1a, 1b;
- Fig. 2a: eine schematische, perspektivische Darstellung einer nicht erfindungsgemäßen Ausführungsform einer Entnahmehilfe, verrastet an einer Endscheibe eines Abscheideelements;
- Fig. 2b: eine schematische, perspektivische Ansicht der Entnahmehilfe von Fig. 2a;
- Fig. 2c: eine schematische Aufsicht auf die Entnahmehilfe von Fig. 2a, 2b;
- Fig. 3: einen schematischen Querschnitt durch eine alternative nicht erfindungsgemäße Ausführungsform einer Entnahmehilfe, wobei an Rastfingern der Entnahmehilfe jeweils ein Hakenelement und ein Fortsatz ausgebildet sind;
- Fig. 4a: eine weitere nicht erfindungsgemäße Ausführungsform einer Entnahmehilfe verrastet an einem Abscheideelement in einer schematischen, perspektivischen Ansicht;
- Fig. 4b: eine schematische Aufsicht auf die Entnahmehilfe und das Abscheideelement von Fig. 4a;
- Fig. 4c: einen schematischen Längsschnitt durch die Entnahmehilfe und das Abscheideelement von Fig. 4a, 4b.

### Ausführungsform(en) der Erfindung

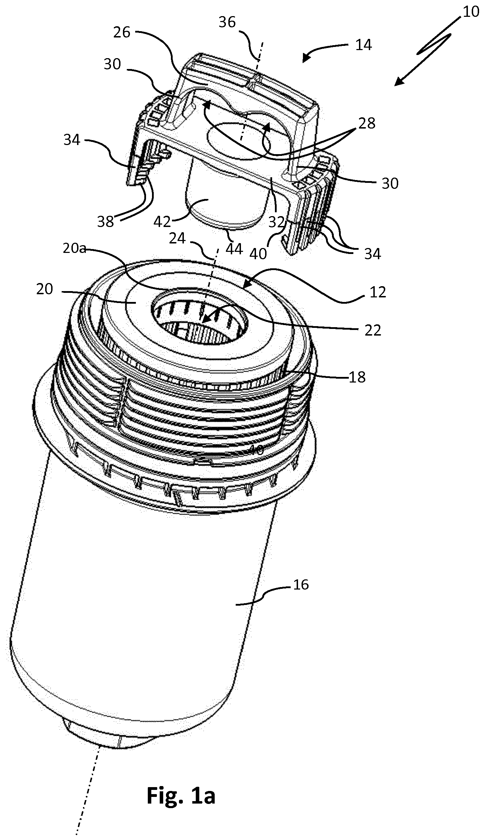

**Fig. 1a** zeigt eine schematische, perspektivische Ansicht eines erfindungsgemäßen Entnahmesystems **10** mit einem Abscheideelement **12** zum Abscheiden von in einem Fluid, hier Öl, enthaltenen Verunreinigungen und einer Entnahmehilfe **14,** mittels derer das Abscheideelement 12 bequem aus einem Gehäuse **16** entnommen werden kann. Das Abscheideelement 12 ist beispielhaft als ein Ölfilter ausgeführt und weist ein Filtermedium **18** sowie eine stirnseitig angeordnete Endscheibe **20** mit einer zentralen Ausnehmung **22** auf, über die das Fluid aus dem Abscheideelement 12 herausführbar ist. Die zentrale Ausnehmung ist in radialer Richtung nach außen durch einen mit **20a** bezeichneten Endscheibenbereich bzw. Randbereich der Endscheibe 20 unmittelbar begrenzt. Das Filtermedium 18 ist zur Längsachse **24** des Abscheideelements 12 ringförmig angeordnet und einenends in der gezeigten oberen Endscheibe 20 eingebettet gehalten bzw. an der Endscheibe 20 festgeklebt. Das Filtermedium 18 ist vom Fluid in einer zur Längsachse 24 radialen Richtung von außen nach innen durchströmbar.

Die Entnahmehilfe 14 weist einen Griffabschnitt **26** auf, der aus Ergonomiegründen mit zwei Griffmulden **28** versehen sein kann. Der Griffabschnitt 26 kann von mehreren Fingern (nicht dargestellt) einer Hand eines Benutzers der Entnahmehilfe 14 umgriffen werden. Der Griffabschnitt 26 weist einen insgesamt U-förmige Form mit zwei voneinander bebastandet angeordneten Armen bzw. Schenkeln **30** auf. Die Schenkel 30 sind einenends jeweils an einer Zwischenplatte **32** befestigt. An der Zwischenplatte 32 sind hier beidenends je fünf Rastfinger **34** angeformt, die sich entlang einer Mittelachse **36** der Entnahmehilfe 14 von der Zwischenplatte 32 bzw. dem Griffabschnitt 26 wegerstrecken. Es versteht sich, dass auch mehr oder weniger als fünf Rastfinger vorgesehen sein können. Die Rastfinger 34 weisen jeweils ein endständig angeordnetes Hakenelement **38** auf, das von dem jeweiligen Rastfinger 34 nach radial innen wegragt. Die Entnahmehilfe 14 weist einen Axialanschlag **40** für die Endscheibe des aus dem Gehäuse 16 zu entnehmenen Abscheideelements 12 auf. Der Axialanschlag 40 weist in Richtung der Hakenelemente 38 und ist beispielhaft durch die Rastfinger 34 gebildet. Die Entnahmehilfe 14 kann einen, bevorzugt rohrförmigen, Zentrierstutzen **42** aufweisen, der in die zentrale Ausnehmung 22 der Endscheibe 20 des Abscheideelements 12 einführbar ist. Der Zentierstutzen 42 ist bei dem in Fig. 1a gezeigten Ausführungsbeispiel an der Zwischenplatte 32 angeordnet und erstreckt sich von der Zwischenplatte 32 koaxial zur Mittelachse 36 der Entnahmehilfe 14 in axialer Richtung weg. Der Zentrierstutzen 42 kann mit seinem freien Ende **44** in axialer Richtung über die Rastfinger 34 vorstehen, um eine zuverlässige Führung der Entnahmehilfe 14 beim Ankoppeln an der Endscheibe 20 des Abscheideelements 12 zu ermöglichen. Nach einem in den Figuren nicht näher gezeigten Ausführungsbeispiel kann der vorgenannte Axialanschlag 40 auch durch einen vom Zentrierstutzen 42 in radialer Richtung vorspringenden Bund oder dergl. ausgebildet sein.

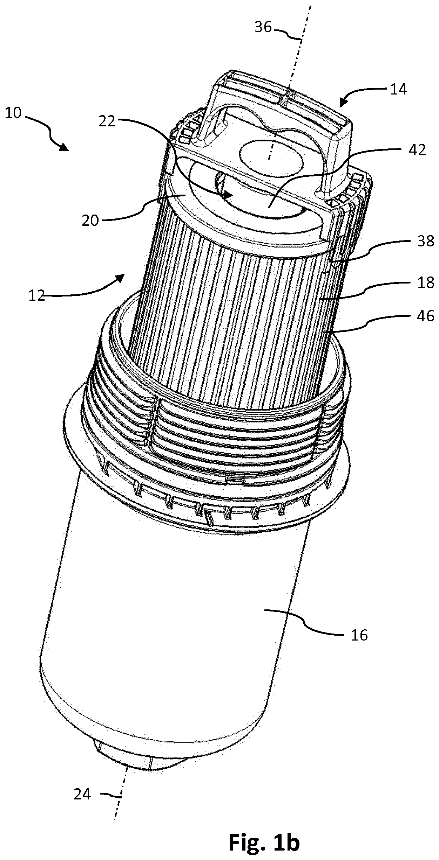

**Fig. 1b** zeigt das erfindungsgemäße Entnahmesystem 10 aus Fig. 1a während des Entnahmevorgangs des Abscheideelements 12 aus dem Gehäuse 16. Die Entnahmehilfe 14 ist mit der Endscheibe 20 des Abscheideelement 12 verrastet. Die Rastfinger 34 übergreifen die Endscheibe 20 außenumfangsseitig und hintergreifen die Endscheibe 20 mit ihren Hakenelementen 38. Die Hakenelemente 38 können dabei insbesondere von außen in radialer Richtung in Falten **46** des Abscheidemediums 18 eingreifen. In diesem Fall wird die Entnahmehilfe 14 durch das Abscheidemedium 18 drehfest bzw. im Wesentlichen drehfest an dem Abscheideelement 12 festgelegt, so dass das Abscheideelement 12 vereinfacht aus seinem Sitz im Gehäuse 16 gelockert werden kann. Durch die Rastfinger 34 ist darüber hinaus eine beiderseitige Mehrpunktverrastung der Entnahmehilfe 14 an der Endscheibe 20 des Abscheideelements 12 gewährleistet. Zusätzlich erstreckt sich der Zentrierstutzen 42 über die zentrale Ausnehmung 22 der Endscheibe 20 in das Abscheideelement 12 hinein. Die Entnahmehilfe 14 kann dadurch gegenüber der Endscheibe 20 nicht verkippen, wodurch ein unbeabsichtigtes Lösen der Rastfinger 34 aus dem Hintergriff mit der Endscheibe 20 unterbunden wird. Bei der Entnahme des Abscheideelements 12 aus dem Gehäuse 16 wird dadurch einem verletzungsträchtigen Abrutschen der mit der Endscheibe 20 verrasteten Entnahmehilfe 14 vom Abscheideelement 12 zuverlässig entgegengewirkt.

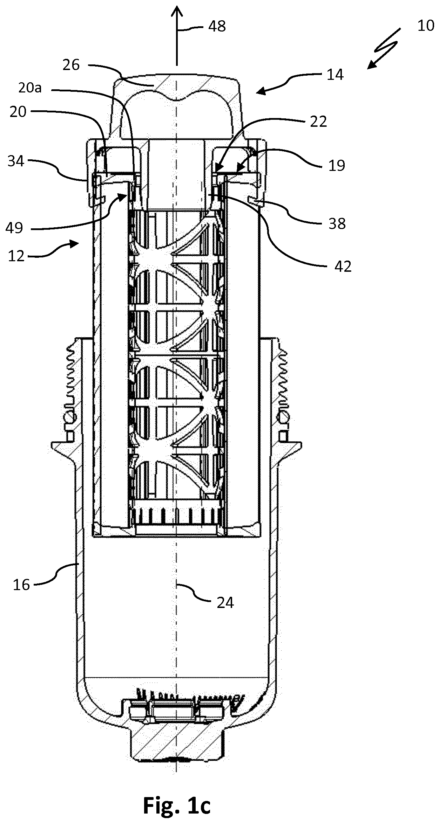

Fig. 1c zeigt das Entnahmesystem 10 aus Fig. 1b in einem Längsschnitt mit der am Abscheideelement 12 angekoppelten Entnahmehilfe 14 während des Entnahmevorgangs. Der Axialanschlag 40 und die Hakenelemente 38 der Rastfinger 34 sind in axialer Richtung derart voneinander beabstandet, dass die Entnahmehilfe 14 mit einem axialen Spiel an der Endscheibe 20 verrastet gehalten angeordnet ist. Es versteht sich, das der Axialanschlag 40 und die Hakenelemente 38 auch derart voneinander beabstandet sein können, dass die Entnahmehilfe 14 ohne ein solches axiales Spiel mit der Endscheibe 20 verrastbar ist.

Zum Verrasten der Entnahmehilfe 14 mit der Endscheibe 20 des Abscheideelements 12 wird die Entnahmehilfe 14 zunächst in axialer Richtung auf das im Gehäuse 16 angeordnete Abscheideelement 12 aufgeschoben, bis die Endscheibe 20 des Abscheideelements 12 an dem Axialanschlag 40 der Entnahmehilfe 14 anschlägt. Die Rastfinger 34 der Entnahmehilfe 14 werden dabei gegen die Endscheibe 20 geführt und durch diese relativ zur Mittelachse 36 der Entnahmehilfe 14 in radialer Richtung nach außen elastisch ausgelenkt. Sobald die Hakenelemente 38 die Endscheibe 20 in axialer Richtung passiert haben, schnappen die Rastfinger 34 selbsttätig in ihre Rastposition zurück, in der die Hakenelemente 38 die Endscheibe 20 hintergreifen. Das Abscheideelement 12 wird nachfolgend mittels der am Abscheideelement 12 verrastet gehaltenen Entnahmehilfe 14 in Pfeilrichtung **48** längs der Mittelachse 36 der Entnahmehilfe 14 bzw. der Längsachse 24 des Abscheideelements 12 aus dem Gehäuse 16 herausgezogen. Die Entnahmehilfe 14 greift somit in ihrem mit der Endscheibe 20 des Abscheideelements 12 verrasteten Zustand außerhalb eines die zentrale Ausnehmung 22 der Endscheibe in radialer Richtung nach außen unmittelbar begrenzenden Endscheibenbereichs an der Endscheibe 20 an. Die Rastfinger 34 greifen mit anderen Worten in die zentrale Ausnehmung 22 der Endscheibe 20 nicht ein.

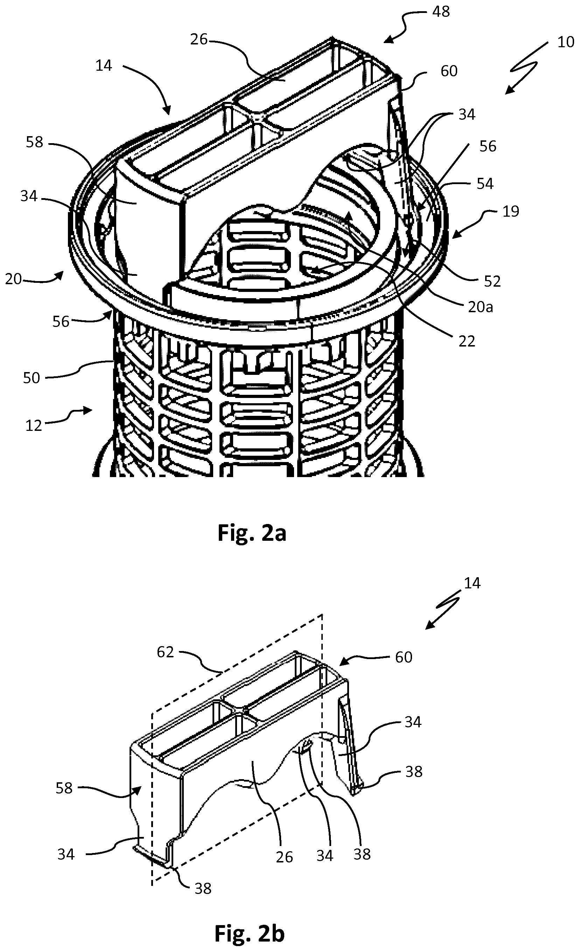

**Fig. 2a** zeigt eine Ausführungsform eines Entnahmesystems 10 in einer nicht erfindungsgemäßen Ausführungsform. Das Abscheideelement 12 ist aus Gründen der Veranschaulichung nur teilweise dargestellt und umfasst einen gitterartigen Grundkörper **50** (= Stützrohr), der zur innenseitigen Abstützung eines in Fig. 2a nicht näher dargestellten Abscheidemediums, beispielsweise eines Filtermediums bzw. eines Koaleszermedums, dient. Am Grundkörper 50 ist stirnseitig eine Endscheibe 20 mit einer zentralen Ausnehmung 22 angeformt. An der Endscheibe 20 ist in radialer Richtung außerhalb der zentralen Ausnehmung 22 ein Ringspalt **52** ausgebildet. Der Ringspalt 52 ist in radialer Richtung außenseitig von einer äußeren Schulter **54** der Endscheibe 20 umlaufend begrenzt. Die äußere Schulter 54 kann fluiddicht in ein Gehäuse (nicht dargestellt) eingesetzt werden. Die äußere Schulter 54 kann dazu ein in der Fig. 2a nicht näher gezeigtes Dichtungselement tragen. In der Endscheibe 20 sind Strömungsöffnungen **56** ausgebildet. Die Strömungsöffnungen 56 sind in Umfangsrichtung des Abscheideelements 12 voneinander beabstandet angeordnet. Durch die Strömungsöffnungen 56 werden Strömungswege für das Fluid aus dem Ringspalt 52 in eine radial außenliegende Umgebung (= Rohseite) des Abscheideelements 12 bzw. des Abscheidemediums eröffnet. Dadurch kann das Fluid im Betrieb des Abscheideelements 12 zunächst in den Ringspalt 52 und von dort über die Strömungsöffnungen 56 radial außen am Abscheideelement 12 entlangströmen, um das Abscheidemedium (nicht gezeigt) sowie den gittarartigen Grundkörper 50 nachfolgend in radialer Richtung von außen nach innen zu durchströmen und das Abscheideelement 12 schließlich über die zentrale Ausnehmung 22 der Endscheibe 20 zu verlassen.

Die Entnahmehilfe 14 umfasst hier einen Griffabschnitt 26 mit insgesamt drei Rastfingern 34. An einem ersten Ende **58** des Griffabschnitts 26 ist einer der Rastfinger 34 angeordnet. An einem dem ersten Ende 58 gegenüberliegenden zweiten Ende **60** des Griffabschnitts 26 sind zwei Rastfinger 34 angeordnet (siehe auch Fig. 2b-2c). Jeder der Rastfinger 34 greift in eine jeweilige der Strömungsöffnungen 56 ein. An den Rastfingern 34 ausgebildete Hakenelemente (in Fig. 2a verdeckt, siehe Fig. 2b-2c) hintergreifen die äußere Schulter 54 der Endscheibe 20 dabei nach radial außen. Die Entnahmehilfe 14 hintergreift die Endscheibe 20 somit in ihrem mit der Endscheibe 20 verrasteten Zustand radial außerhalb des an die zentrale Ausnehmung 22 unmittelbar angrenzenden Endscheibenbereichs 20a. Die Rastarme 34 erstrecken sich mithin nicht in die zentrale Ausnehmung 22 der Endscheibe 20 hinein.

**Fig. 2b** zeigt eine schematische, perspektivische Darstellung der Entnahmehilfe 14 aus Fig. 2a. Der Rastfinger 34 am ersten Ende 58 des Griffabschnitts 26 ist symmetrisch zur Mittelebene **62** der Entnahmehilfe 14 ausgebildet. Die beiden anderen Rastfinger 34 sind jeweils von der Mittelebene 62 beabstandet angeordnet.

Zum Verrasten der Entnahmehilfe 14 an der Endscheibe 20 des Abscheideelements 12 (vgl. Fig. 2a) wird die Entnahmehilfe 14 mit den Rastfingern 34 voran gegen die Endscheibe 20 gedrückt. Dabei werden die Rastfinger 34 unter Anlage an der Endscheibe 20 nach radial innen gebogen, so dass die Hakenelemente 38 an der äußeren Schulter 54 der Endscheibe vorbeigleiten können. Sobald die Entnahmehilfe 14 weit genug auf die Endscheibe 20 aufgeschoben ist, federn die Rastfinger 34 nach radial außen, so dass die Hakenelemente 38 die äußere Schulter 54 hintergreifen. Das Abscheideelement kann dann mittels der an der Endscheibe 20 verrasteten Entnahmehilfe 14 aus dem Gehäuse (vgl. Figur 1a) gezogen werden.

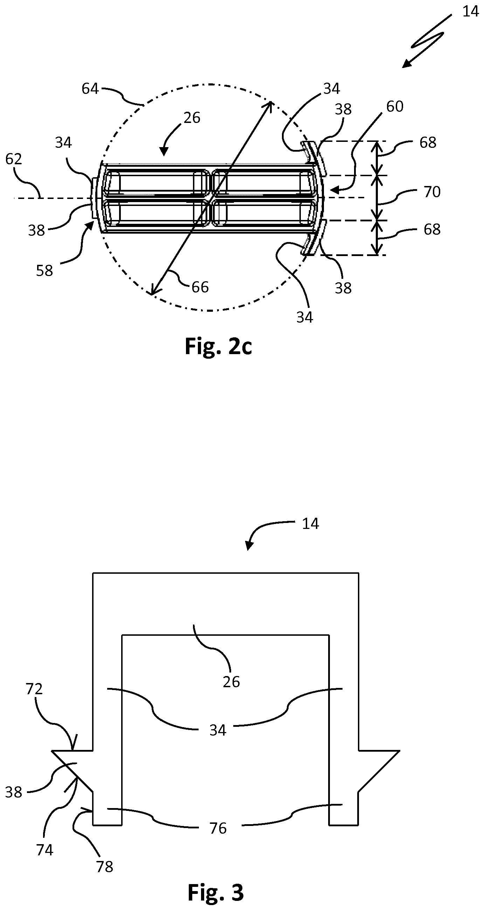

**Fig. 2c** zeigt eine schematische Draufsicht auf die Entnahmehilfe 14 gemäß den Fign. 2a, 2b. An dem ersten Ende 58 des Griffabschnitts 26 ist der Rastfinger 34 mit seinem Hakenenelement 38 symmetrisch zur Mittelebene 62 angeordnet.

An dem zweiten Ende 60 sind die Rastfinger 34 und die jeweiligen Hakenelemente 38 von der Mittelebene 62 beabstandet angeordnet. Die Rastfinger 34 und die Hakenelemente 38 sind dabei auf einem Kreisbogen 64 angeordnet. Ein Durchmesser **66** des Kreisbogens 64 ist dabei auf einen Schulterdurchmesser der äußeren Schulter (vgl. Fig. 2a) abgestimmt. Die Rastfinger 34 und die jeweiligen Hakenelemente 38 haben gleiche Breiten 68. Zwischen den Rastfingern 34 und den jeweiligen Hakenelementen 38 ist ein Abstand **70** eingerichtet. Der Abstand 70 ist um etwa 20 % größer als die Breiten 68. Zwischen den Rastfingern 34 kann ein Steg (nicht dargestellt) zwischen Strömungsöffnungen (vgl. Fig. 2a) der Endscheibe des Abscheideelements aufgenommen werden.

**Fig. 3** zeigt schematisch einen Querschnitt durch eine nicht erfindungsgemäße Entnahmehilfe 14 zur Entnahme eines Abscheideelements aus einem Gehäuse (vgl. Figuren 1a, 1b), die einen besonders einfachen Aufbau aufweist. Die Entnahmehilfe 14 umfasst einen Griffabschnitt 26 mit zwei Rastfingern 34 mit jeweils einem Hakenelement 38. Die Hakenelemente 38 weisen dem Griffabschnitt 26 zugewandt je eine Rastfläche **72** auf. Dem Griffabschnitt 26 abgewandt ist an den Hakenelementen 38 je eine Einführschräge **74** ausgebildet. Jenseits des Hakenelements 38 mündet jeder der Rastfinger 34 in einen Fortsatz **76.** Die Hakenelemente 38 weisen nach außen. An den Fortsätzen 76 ist auf der Seite der Hakenelemente 38, d. h. außen, eine Zentrierfläche **78** ausgebildet. Die Zentrierfläche 78 beginnt direkt an der Einführschräge 74. Die in Fig. 3 gezeigte Entnahmehilfe 14 wird mit der Endscheibe des Abscheideelements radial außerhalb eines an die zentrale Ausnehmung angrenzenden Endscheibenbereichs verrastet, wie dies beispielsweise in den Fign. 2a, 2b gezeigt ist. Gemäß eines in der Zeichnung nicht näher gezeigten Ausführungsbeispiels können die Hakenelemente 38 in radialer Richtung nach innen von den Rastfingern wegstehen, so dass die Entnahmehilfe in einer der in den Fign. 1a bis 1c entsprechenden Weise mit der Endscheibe des Abscheideelements verrastet werden kann.

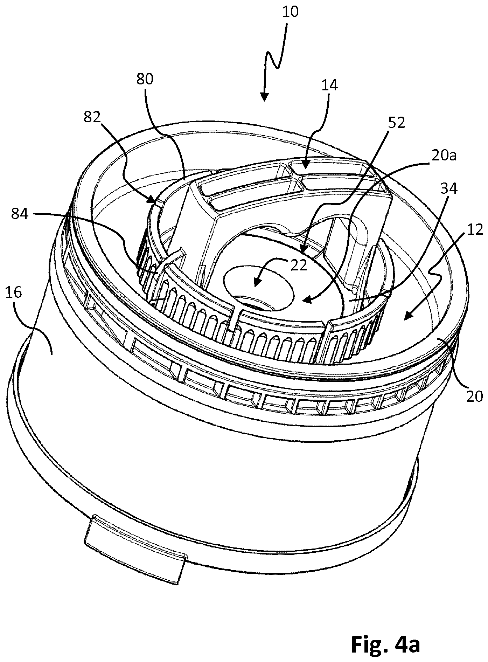

**Fig. 4a** zeigt eine weitere nicht erfindungsgemäße Ausführungsform eines Entnahmesystems 10. Die Entnahmehilfe 14 ist hier bereits zur Entnahme eines Abscheideelements 12 aus einem Gehäuse 16 an dem Abscheideelement 12 verrastet. Das Abscheideelement 12 weist stirnseitig eine Endscheibe 20 mit einer einzigen zentralen Ausnehmung 22 auf. Die zentrale Ausnehmung 22 wird nach radial außen unmittelbar durch einen Randbereich der Endscheibe 20, d. h. den Endscheibenbereich 20a begrenzt. Die Entnahmehilfe 14 greift mit Rastfingern 34 in einen Ringspalt 52 der Endscheibe 20 ein.

Die Endscheibe 20 umfasst einen axialen Kragen **80** mit Schlitzen **82.** Die Schlitze 82 können in Umfangsrichtung der Endscheibe 20 insbesondere regelmäßig voneinander beabstandet am axialen Kragen 80 angeordnet sein. Die Entnahmehilfe 14 weist Auskragungen **84** auf, die sich bezogen auf die Mittelachse 36 der Entnahmehilfe 14 jeweils radial nach außen von den Rastfingern 34 wegerstrecken. Die Auskragungen 84 greifen im mit dem Abscheideelement 12 verrasteten Zustand der Entnahmehilfe 14 in die Schlitze 82 der Kragens 80 ein. Die Entnahmehilfe ist dadurch drehfest mit der Endscheibe 20 des Abscheideelements 12 verkoppelt. Das Abscheideelement 12 kann somit mittels der Entnahmehilfe 14 gegenüber dem Gehäuse 16 gedreht werden, um es aus seinem (Dicht-)Sitz zu lockern und so leichter aus dem Gehäuse 16 entnehmen zu können.

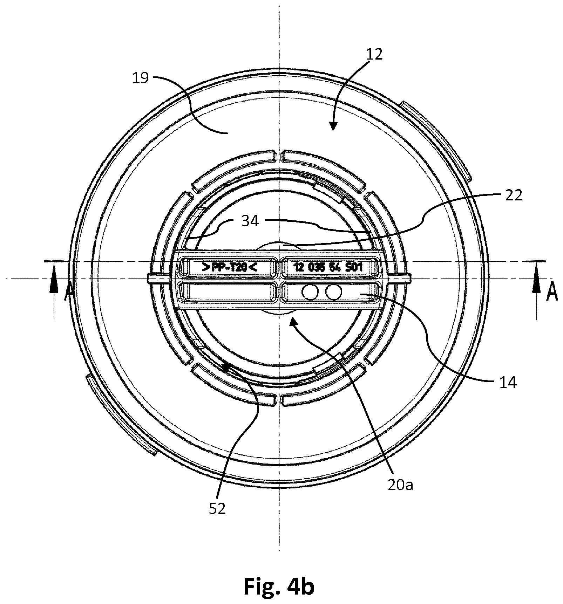

**Fig. 4b** zeigt eine schematische Aufsicht auf die Entnahmehilfe 14 und das Abscheideelement 12 gemäß Fig. 4a. Die Rastfinger 34 der Entnahmehilfe 14 greifen von oben in den Ringspalt 52 der Endscheibe 20 ein. Die zentrale Ausnehmung 22 ist konzentrisch zu dem Ringspalt 52 in der Endscheibe 20 ausgebildet. Der Endscheibenbereich 20a begrenzt die zentrale Ausnehmung 22 radial außenseitig. Der Endscheibenbereich 20a ist in radialer Richtung der zentralen Ausnehmung 22 und dem Ringspalt zwischengeschaltet angeordnet.

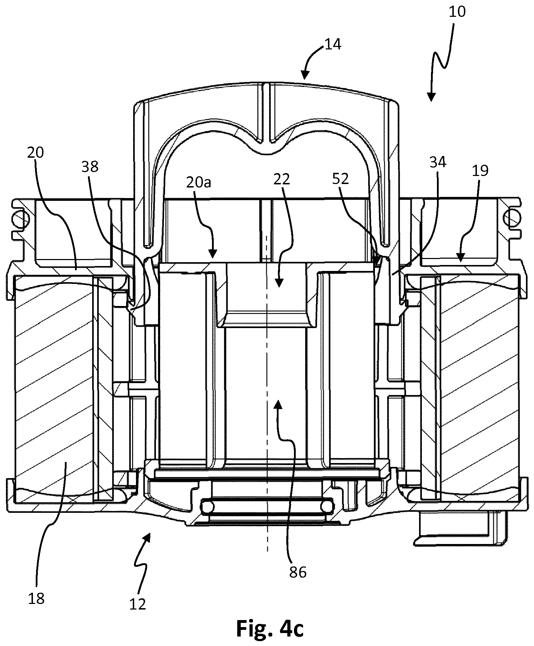

**Fig. 4c** zeigt einen schematischen Längsschnitt entlang Ebene A-A (vgl. Fig. 4b) durch die Entnahmehilfe 14 und das Abscheideelement 12 des Entnahmesystems 10 von Fig. 4a, 4b nach vollzogenener Entnahme des Abscheideelements 12 aus einem Gehäuse (vgl. Fig. 4a). Das Abscheideelement 12 umfasst ein Abscheidemedium 18, das stirnseitig an der Endscheibe 20 gehalten ist. Hier ist das Abscheidemedium 18 mit der Endscheibe 20 verklebt. Die zentrale Öffnung 22 der Endscheibe 20 eröffnet einen fluidischen Zugang in einen Innenraum **86** des Abscheideelements 12. Ein Fluid kann im Betrieb des Abscheideelements durch die zentrale Öffnung 22 in den Innenraum 86 hinein bzw. aus dem Innenraum 86 heraus strömen. Die zentrale Öffnung 22 stellt mithin eine Strömungsöffnung für das Fluid dar.

Radial außerhalb des die zentrale Öffnung 22 begrenzenden Endscheibenbereichs 20a ragt die Entnahmehilfe 14 mit ihren Rastfingern 34 in den Ringspalt 52 der Endscheibe 20 hinein. Hakenelemente 38, die an den Rastfingern 34 nach radial außen weisend angeformt sind, hintergreifen die Endscheibe 20.

Die vostehend gezeigten Entnahmehilfen zeichnen sich durch den von der zentralen Ausnehmung der Endscheibe bzw. eines daran unmittelbar angrenzenden Endscheibenbereichs in radialer Richtung beabstandeten Angriffspunkts an der Endscheibe durch eine verbesserte Kippstabiliität aus. Darüber hinaus kann das aus dem Gehäuse zu entnehmende Abscheideelement vereinfacht aus seinem Sitz innerhalb des Gehäuses freigewackelt bzw. freigedreht und nachfolgend herausgezogen werden.

## Patentansprüche

1. Entnahmesystem (10), umfassend:
- ein Abscheideelement (12) zum Abscheiden von in einem Fluid enthaltenen Verunreinigungen, mit einem Abscheidemedium (18) und mit einer stirnseitig am Abscheideelement (12) angeordneten Endscheibe (20), die eine zentrale Ausnehmung (22) aufweist, sowie
- eine Entnahmehilfe (14) zum Entnehmen des Abscheideelements (12) aus einem Gehäuse (16),
wobei die Entnahmehilfe (14) einen Griffabschnitt (26) und wenigstens zwei voneinander beabstandet angeordnete Rastfinger (34) umfasst, die sich jeweils entlang einer Mittelachse (36) der Entnahmehilfe (14) vom Griffabschnitt (26) weg erstrecken, und wobei
an jedem Rastfinger (34) ein Hakenelement (38) zum Hintergreifen der Endscheibe (20) des Abscheideelements (12) radial außerhalb eines die zentrale Ausnehmung (22) in radialer Richtung nach außen unmittelbar begrenzenden Endscheibenbereichs (20a) angeordnet ist, **dadurch gekennzeichnet, dass** die Entnahmehilfe (14) in ihrem mit der Endscheibe (20) verrasteten Zustand die Endscheibe (20) mit ihren Rastfingern (34) außenumfangsseitig übergreift, wobei die Hakenelemente (38) jeweils nach radial innen gerichtet sind.

2. Entnahmesystem nach Anspruch 1, **dadurch gekennzeichnet, dass** das Abscheidemedium (18) als ein sternförmig gefalteter Balg ausgeführt ist, wobei sich die Hakenelemente (38) der Rastfinger (34) in radialer Richtung in Falten (46) des Abscheidemediums (18) hinein erstrecken.

3. Entnahmesystem nach einem der vorhergehenden Ansprüche, **dadurch gekennzeichnet, dass** die Entnahmehilfe (14) drei Rastfinger (34) aufweist, insbesondere wobei einer der Rastfinger (34) einem ersten Ende (58) des Griffabschnitts (26) der Entnahmehilfe (14) zugeordnet ist, und wobei die jeweils anderen beiden Rastfinger (34) einem zweiten Ende (60) des Griffabschnitts (26) zugeordnet sind.

4. Entnahmesystem nach einem der vorhergehenden Ansprüche, **dadurch gekennzeichnet, dass** zumindest ein Teil der Hakenelemente (38) mit einer Einführschräge (74) und mit einem Fortsatz (76) ausgebildet sind, wobei der Fortsatz (76) vom Griffabschnitt (26) der Entnahmehilfe (14) abgewandt an dem jeweiligen Hakenelement (38) angeordnet ist, und dass jeder Fortsatz (76) eine Zentrierfläche (78) aufweist, wobei die Zentrierfläche (78) im Wesentlichen parallel oder unter einem spitzen Winkel zu der Mittelachse (36) der Entnahmehilfe (14) hin ausgerichtet ist.

5. Entnahmesystem nach Anspruch 1, **dadurch gekennzeichnet, dass** die Entnahmehilfe (14) einen, bevorzugt rohrförmigen, Zentrierstutzen (42) aufweist, der in die zentrale Ausnehmung (22) der Endscheibe (20) des Abscheideelements (12) einführbar ist.

6. Entnahmehilfe (14) für ein Entnahmesystem (10) nach einem der vorhergehenden Ansprüche 1 bis 5.

## Claims

1. Removal system (10), comprising:
- a separating element (12) for separating impurities contained in a fluid, with a separating medium (18) and with an end disc (20) disposed on the front side of the separating element (12) and featuring a central recess (22), as well as
- a removal aid (14) for removing the separating element (12) from a housing (16),
wherein the removal aid (14) comprises a grip portion (26) and at least two latching fingers (34) spaced apart from each other which extend away from the grip portion (26) along a central axis (36) of the removal aid (14), and wherein a hook element (38) for engaging behind the end disc (20) of the separating element (12) is disposed on each latching finger (34) radially outside an end disc area (20a) directly delimiting the central recess (22) in the radially outward direction, **characterized in that** the removal aid (14), when snap-connected to the end disc (20), projects beyond the end disc (20) on the outer circumferential side with its latching fingers (34), wherein the hook elements (38) are each directed radially inwards.

2. Removal system according to claim 1, **characterized in that** the separating medium (18) is designed as star-shaped folded bellows, wherein the hook elements (38) of the latching fingers (34) extend in radial direction into folds (46) of the separating medium (18).

3. Removal system according to one of the preceding claims, **characterized in that** the removal aid (14) features three latching fingers (34), in particular wherein one of the latching fingers (34) is allocated to one first end (58) of the grip portion (26) of the removal aid (14), and wherein the respective other two latching fingers (34) are allocated to a second end (60) of the grip portion (26).

4. Removal system according to one of the preceding claims, **characterized in that** at least one part of the hook elements (38) is realized with an insertion bevel (74) and with an extension (76), wherein the extension (76) facing away from the grip portion (26) of the removal aid (14) is disposed on the respective hook element (38), and that each extension (76) features a centering surface ()78), wherein the centering surface (78) is substantially oriented parallel or under an acute angle with regard to the central axis (36) of the removal aid (14).

5. Removal system according to claim 1, **characterized in that** the removal aid (14) features a, preferably tubular, centering connector (42) which can be introduced into the central recess (22) of the end disc (20) of the separating element (12).

6. Removal aid (14) for a removal system (10) according to one of the preceding claims 1 to 5.

## Revendications

1. Système de prélèvement (10), comprenant :
- un élément séparateur (12) pour séparer des impuretés contenues dans un fluide, avec un milieu séparateur (18) et avec un disque d'extrémité (20) disposé sur la face frontale de l'élément séparateur (12) et présentant un évidement central (22), ainsi qu'
- une aide de prélèvement (14) pour prélever l'élément séparateur (12) d'un boîtier (16),
dans lequel l'aide de prélèvement (14) comprend une partie de poignée (26) et au moins deux doigts d'encliquetage (34) espacés l'un de l'autre qui s'étendent chacun le long d'un axe médian (36) de l'aide de prélèvement (14) en s'écartant de la partie de poignée (26), et dans lequel
un élément de crochet (38) destiné à s'engager derrière le disque d'extrémité (20) de l'élément séparateur (12) est disposé sur chaque doigt d'encliquetage (34) radialement à l'extérieur d'une zone du disque d'extrémité (20a) délimitant directement l'évidement central (22) radialement vers l'extérieur, **caractérisé en ce que** l'aide de prélèvement (14), dans son état d'encliquetage avec le disque d'extrémité (20), chevauche le disque d'extrémité (20) avec ses doigts d'encliquetage (34) sur le côté périphérique extérieur, dans lequel les éléments de crochet (38) sont chacun dirigés radialement vers l'intérieur.

2. Système de prélèvement selon la revendication 1, **caractérisé en ce que** le milieu séparateur (18) est exécuté en tant que soufflet plié en étoile, dans lequel les éléments de crochet (38) des doigts d'encliquetage (34) s'étendent en direction radiale dans les plis (46) du milieu séparateur (18).

3. Système de prélèvement selon l'une des revendications précédentes, **caractérisé en ce que** l'aide de prélèvement (14) présente trois doigts d'encliquetage (34), notamment dans lequel l'un des doigts d'encliquetage (34) est assigné à une première extrémité (58) de la partie de poignée (26) de l'aide de prélèvement (14), et dans lequel les deux autres doigts d'encliquetage (34) respectifs sont assignés à une seconde extrémité (60) de la partie de poignée (26).

4. Système de prélèvement selon l'une des revendications précédentes, **caractérisé en ce qu'au** moins une partie des éléments de crochet (38) est réalisée avec une inclinaison d'introduction (74) et avec un prolongement (76), dans lequel le prolongement (76), situé à l'opposé de la partie de poignée (26) de l'aide de prélèvement (14), est disposé sur l'élément de crochet (38) respectif, et que chaque prolongement (76) présente une surface de centrage (78), dans lequel la surface de centrage (78) est essentiellement orientée de manière parallèle ou dans un angle aigu par rapport à l'axe central (36) de l'aide de prélèvement (14).

5. Système de prélèvement selon la revendication 1, **caractérisé en ce que** l'aide de prélèvement (14) présente une tubulure de centrage (42), de préférence tubulaire, qui peut être introduite dans l'évidement central (22) du disque d'extrémité (20) de l'élément séparateur (12).

6. Aide de prélèvement (14) pour un système de prélèvement (10) selon l'une des revendications précédentes 1 à 5.
